# EUROPEAN PATENT APPLICATION

(11) **EP 4 769 277 A1**
(43) Date of publication of application: **01.07.2026**
(21) Application number: 25227635.7
(22) Date of filing: 30.12.2025
(51) Int. Cl.: G06Q 30/015, G06Q 30/0601, H04L 51/02

(54) **LLM-BASED SYSTEM AND METHOD FOR CALCULATING LEAD SCORES AND GENERATING PRODUCT RECOMMENDATIONS**

(30) Priority: 31.12.2024 IL 31813224
(71) Applicant: Deutsche Telekom AG, 53113 Bonn (DE)
(72) Inventor: HALLER, Omri, 5591610 Ganei Tikva (IL); MEIDAN, Yair, 7404503 Ness-Ziona (IL); MIMRAN, David, 6215505 Tel Aviv (IL); SHABTAI, Asaf, 7684200 Hulda (IL); ELOVICI, Yuval, 7986400 Arugot (IL); KAISER, Peter, 50937 Köln (DE); LEHMANN, Heiko, 12587 Berlin (DE)
(74) Representative: Weickmann & Weickmann PartmbB

(57) **Abstract**

An LLM-based method for calculating lead scores and generating product recommendations for a user of a troubleshooting chatbot, comprising providing an orchestrator module that is adapted to wrap the chatbot for receiving user prompts from the user; in response to the user prompts, conducting a troubleshooting conversation with the chatbot user; inferring lead scores for the user; generating a solution to each difficulty raised by the user during the troubleshooting conversation; providing a recommender system being in data communication with the orchestrator module; sending the generated solution and the history of the troubleshooting conversation to the recommender system; analyzing the solution, history and lead scores and providing a recommendation that corresponds to the user, to the orchestrator module; if the lead scores of the user are higher than a predetermined threshold, presenting the solution, augmented with the recommendation to the user, by the orchestrator module .

## Description

### Field of the Invention

The present invention relates to the field of recommender systems. More particularly, the present invention relates to a LLM-based system and method for calculating lead scores, generating product recommendations, and optimizing the recommendation timing for users of a technical support chatbot.

### Background for the Invention

Large Language Model (LLM) based conversational assistants (also known as chatbots) have been employed to automate customer support services in various domains, including education [7], finance [6], e-commerce [4], and healthcare [11]. The availability and the relatively low-cost development and maintenance of chatbots, make chatbot-based support an advantageous solution, which offers a significant competitive edge over human-based support [1].

For companies which offer chatbot-based support to their customers, the potential of these systems actually extends beyond immediate problem-solving. For example, an online conversation with a chatbot, which was initiated due to technical difficulties faced by the chatbot user (referred to hereinafter as the "user"), does not have to remain solely focused on resolving those difficulties. Instead, this conversation can also be leveraged to increase revenues for the company by recommending products (or services) offered by that company, for the user to purchase. The recommended products can address the current difficulties raised by the user, or prevent future difficulties. These recommendations can be provided to the user during a support conversation (by the chatbot itself), or only after the end of the conversation, by a dedicated human or LLM-based sales specialist. Altogether, augmenting support conversations with personalized product recommendations has the potential to not only improve user experience, but also to open new paths for business growth, and improve downstream business metrics, such as the Share of Wallet (SoW - a marketing metric used to calculate the percentage of a customer's spending for a type of product or service that goes to a particular company) [2], and Customers' Lifetime Value (CLV - a measurement of how valuable a customer is to a company across entire customer relationships) [8].

If a company provides online technical support to its customers via a chatbot, this chatbot normally relies on a Large Language Model (LLM - a model that is trained on immense amounts of data, making it capable of understanding and generating natural language and other types of content to perform a wide range of tasks). This chatbot is already capable of providing a reliable, high quality technical support, possibly by fine-tuning a base-model to this domain [9], using relevant documents in a Retrieval-Augmented Generation (RAG - the process of optimizing the output of a large language model, so it references an authoritative knowledge base outside of its training data sources before generating a response) architecture [5], or any other technique of LLM domain adaptation [10].

It is therefore an object of the present invention to provide a system and a method for enhancing the user experience by providing timely and relevant product recommendations, based on support conversations.

It is another object of the present invention to provide a system and a method for calculating lead scores, generating product recommendations, and optimizing the recommendation timing for users of a technical support chatbot.

It is a further object of the present invention to provide a system and a method for improving the company's business metrics by identifying high-quality leads, and recommending them relevant products, at the right moment.

Other objects and advantages of the invention will become apparent as the description proceeds.

### Summary of the Invention

An LLM-based method for calculating lead scores and generating product recommendations for a user of a troubleshooting chatbot, comprising:
a) providing an orchestrator module being adapted to wrap the chatbot for:
   a.1) receiving user prompts from the user;
   a.2) in response to the user prompts, conducting a troubleshooting conversation with the chatbot user;
   a.3) inferring lead scores for the user;
   a.4) generating a solution to each difficulty raised by the user during the troubleshooting conversation;
b) providing a recommender system being in data communication with the orchestrator module ;
c) sending the generated solution and the history of the troubleshooting conversation to the recommender system;
d) analyzing the solution, history and lead scores and providing a recommendation that corresponds to the user, to the orchestrator module ; and
e) if the lead scores of the user are higher than a predetermined threshold, presenting the solution, augmented with the recommendation to the user, by the orchestrator module .

The method may further comprise the step of optimizing the recommendation timing for the user.

The wrapper for the chatbot may provide one or more of the following capabilities:
- data lookup;
- data analysis;
- problems resolution;
- product recommendation.

The orchestrator module may be adapted to select which capabilities will be utilized to guide a conversation with the user.

The recommender system may be adapted to identify products from a catalog that can enhance the user's existing setup, solve the user's current difficulties, or prevent these and other difficulties from occurring in the future.

The lead scores may be used to determine the likelihood of the users to convert to thereby rank users, based on their lead quality.

The method may further comprise the step of:
a) performing conversation analysis to assess product relevance;
b) analyzing, by the recommender system, the generated solution along with the preceding conversation between the user and the chatbot; and
c) determining if a product can resolve the difficulty presented by the user or can prevent the raised difficulty, or related difficulties, from occurring/reoccurring.

The Recommender system may be adapted to conduct a user-specific assessment, for determining both the likelihood of successful product adoption, and the user's ability to comprehend the value proposed by the recommended product.

The user-specific assessment may include scoring metrics that reflect the user's needs, technical expertise, and engagement, based on a lead score or a technical score.

An LLM-based system for calculating lead scores and generating product recommendations for a user of a troubleshooting chatbot, comprising a computerized device with at least one processor and associated memory for storing operational software, which comprises:
a) an orchestrator module being adapted to wrap the chatbot for:
   a.1) receiving user prompts from the user;
   a.2) in response to the user prompts, conducting a troubleshooting conversation with the chatbot user;
   a.3) inferring lead scores for the user;
   a.4) generating a solution to each difficulty raised by the user during the troubleshooting conversation;
b) a recommender system being in data communication with the orchestrator module;
the computerized device is adapted to:
c) send the generated solution and the history of the troubleshooting conversation to the recommender system;
d) analyze the solution, history and lead scores and providing a recommendation that corresponds to the user, to the orchestrator module; and
e) if the lead scores of the user are higher than a predetermined threshold, present the solution, augmented with the recommendation to the user, by the orchestrator module.

### Brief Description of the Drawings

The above and other characteristics and advantages of the invention will be better understood through the following illustrative and non-limitative detailed description of preferred embodiments thereof, with reference to the appended drawings, wherein:

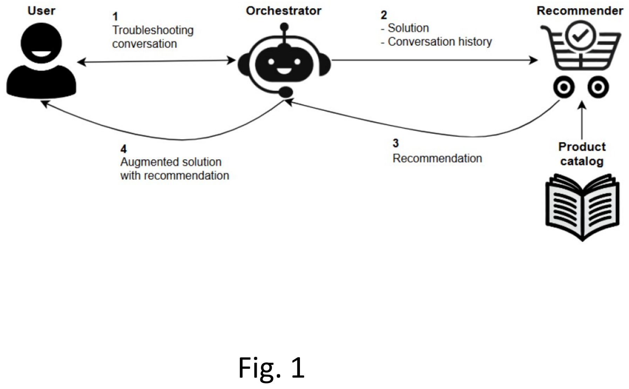

- Fig. 1 is a block diagram of the recommendation generation process within the proposed system.

### Detailed Description of the Invention

The present invention provides an LLM-based system and method for calculating lead scores (a lead comprises identity details of a potential customer who establishes a preliminary engagement regarding an interest in purchasing a product or a service), generating product recommendations, and optimizing the recommendation timing for users of a technical support chatbot. The proposed system provides an orchestrator module (an automated system that coordinates, manages, and sequences complex workflows and multiple software components, ensuring they work together efficiently, automating tasks, managing resources, handling scaling, and maintaining high availability for applications or data pipelines across distributed systems), which is used as a wrapper (a wrapper is a piece of code that is used to modify or extend the behavior of an existing function without modifying its source code. The main purpose of a wrapper is to add some additional functionality to the original code without changing its core logic) for the chatbot with various capabilities, such as data lookup (the process of retrieving specific information from a dataset, database, or system using a key or criteria), data analysis, problems resolution, or product recommendation. The orchestrator integrates an advanced recommender system with a chatbot-based technical support system. The orchestrator module decides which of these capabilities will be utilized to guide a conversation with the user, while optimizing the subsequent personalized recommendations regarding a product (or a service).

The goals of the system and method of the present invention are: (1) enhancing the user experience by providing timely and relevant product recommendations, based on support conversations, and (2) improving the company's business metrics by identifying high-quality leads (for which the lead scores are higher than a predetermined threshold), and recommending them relevant products, at the right moment. The proposed system and method are adapted to decide what to recommend, when to recommend and whether or not a recommendation should be provided.

Regarding the decision what to recommend, the recommender system identifies products from the company's catalog that can enhance the user's existing setup (which refers to how user data and preferences are collected, modeled, and utilized to generate personalized suggestions), solve the user's current difficulties, or prevent these and other difficulties from occurring in the future. The reasoning regarding choosing the specific recommended product(s) from the catalog can be used downstream (converting a user's interest into actual purchases) by either a sales person, by the technical support chatbot itself, or by another chatbot that is optimized for conducting sales conversations.

Regarding the decision when to recommend, the system determines the optimal timing for providing the personalized recommendation, depending on factors such as the user's sentiment, or the understanding as to whether the user's complaint has reached a satisfactory solution or not. The optimality of the recommendation timing is assessed with respect to the likelihood of conversion.

Regarding the decision whether or not a recommendation should be provided, the system evaluates a comprehensive set of lead scores that help determining the likelihood of the user to convert an interest into actual purchases, thereby enabling the ranking of users, based on their lead quality (which represents the likelihood of user conversion from a chatbot user, who seeks technical support, into a buyer). A personalized recommendation will be provided only to users with sufficient lead scores, since recommending products to an uninterested customer might do more harm than good [3], and conducting a human follow-up sales conversation, is costly.

A technical support chatbot can be wrapped by a novel system which selectively augments the technical support functionality with personalized recommendations regarding relevant products offered by the company, which operates the chatbot. With these recommendations, the user experience is enhanced (mostly by being informed of solutions that can prevent future related difficulties), and the company gains an opportunity for business growth. The proposed system and method describe how the user prompts (a prompt is a simple User Interface UI mechanism for prompting the user to make a selection, by creating a dialog box with a message, buttons for the choices, and a dismiss button. Then the user is invited to enter his choice via the UI) can be implicitly leveraged to inferring lead scores, optimizing product recommendations and recommendation timing, while providing thorough reasoning (the mechanism of using available information to generate predictions, make inferences and draw conclusions by representing data in a form that a machine can process and understand, then applying logic to arrive at a decision).

Fig. 1 shows a block diagram of the recommendation generation process of the proposed system. The system's operation consists of the following steps:
At the first step 1, the user engages in a conversation with a technical support chatbot, which is wrapped by the orchestrator module . At the next step 2, once a solution to a difficulty is generated by the technical support chatbot, this solution is returned from the orchestrator module that wraps the technical support chatbot and is sent to the Recommender system, along with the conversation history. At the next step 3, the Recommender system analyzes these inputs, and provides a relevant product recommendation (selected from a pool of products which are drawn from the catalog), as well as lead scores, the time to provide the recommendation to the user, and reasoning regarding the specific recommended product. At the next step 4, the orchestrator module presents the solution augmented with the recommendation to the user.

As illustrated in Fig. 1, the user interacts with the orchestrator module , which internally interacts with the LLM-based technical support chatbot and the Recommender system.

The orchestrator module functions as a wrapper for the existing technical support chatbot. Once a solution to the difficulty is generated by the chatbot, the orchestrator module forwards this solution to the Recommender system, along with the conversation history.

The Recommender system receives the solution, the conversation history and a list of products (or services) to recommend from, as provided, for example, by a catalog. The Recommender system then analyzes the received inputs and makes decisions as to the likelihood of user conversion (i.e., lead quality), and the most suitable product(s) to recommend. These decisions are forwarded to the orchestrator module , which forwards the original ('as is') solution to the user as generated by the support chatbot, or augments the solution with the product decided for recommendation. In case of a positive user engagement with the recommended product (e.g., questions regarding the features of the proposed product, or even request to purchase the recommended product), a subsequent sales conversation (either LLM-based or human-based) can be initiated.

According to the proposed method, data is collected and processed in order to make decisions regarding the lead quality estimation and a product selection for recommendation.

The Recommender system is also adapted to perform conversation analysis to assess product relevance. Accordingly, once a solution is generated by the existing chatbot, the Recommender system analyzes this solution along with the preceding conversation between the user and the chatbot, in order to decide if a product from the catalog can resolve the difficulty presented by the user, as well as to decide if a product from the catalog can prevent the raised difficulty, or related difficulties from occurring/re-occurring.

The Recommender system is also adapted to effectively tailor recommendations by conducting a user-specific assessment, which allows determining both the likelihood of successful product adoption, and the user's ability to comprehend the value proposed by the recommended product. This assessment includes various scoring metrics that reflect the user's needs, technical expertise, and engagement, which together ensure that the recommendation is relevant. This user-specific assessment is quantified through two primary metrics that guide the recommendation process:
- A lead score - The system evaluates whether the user is likely to convert (from a chatbot user, who seeks technical support into a buyer), by calculating a designated lead score using the following inputs that are derived via conversation analysis:
   - Problem severity: This input assesses how badly the difficulty affects the user's ability to use the device, and whether it poses a critical security risk.
   - User engagement level: This input evaluates how actively the user participates in the conversation, and engages with the product recommendation.

A higher lead score implies a higher likelihood to convert.
- **Technical score:** A user with insufficient technical knowledge may not understand why the recommended product is really beneficial, and thus, the chances of conversion might decrease. The technical score represents the user's ability to understand the value of a recommended product due to the fact that every product has a certain value proposition that pertains to some technical aspects. This score is calculated based on the user's knowledge profile that has been inferred implicitly from the (typically textual) interaction with the technical support chatbot. This score assesses how well the user's technical knowledge allows him to understand the merits of the recommended product.

In one embodiment, a computerized device with at least one processor and associated memory for storing operational software is used to implement the LLM-based system for calculating lead scores and generating product recommendations for a user of a troubleshooting chatbot.

As various embodiments and examples have been described and illustrated, it should be understood that variations will be apparent to one skilled in the art without departing from the principles herein. Accordingly, the invention is not to be limited to the specific embodiments described and illustrated in the drawings.

### REFERENCES

1) Abbo, G. A., Crovari, P., and Garzotto, F. (2023). Enhancing conversational troubleshooting with multi-modality: Design and implementation. In Følstad, A., Araujo, T., Papadopoulos, S., Law, E. L.-C., Luger, E., Goodwin, M., and Brandtzaeg, P. B., editors, Chatbot Research and Design, pages 103-117, Cham. Springer International Publishing.
2) Appier (2023). Enhance share of wallet with ai-powered personalization.
3) Bastani, H., Harsha, P., Perakis, G., and Singhvi, D. (2022). Learning personalized product recommendations with customer disengagement. Manufacturing & Service Operations Management, 24(4):2010-2028.
4) Bhargava, V. (2023). Ecommerce chatbots: What they are and use cases.
5) Fan, W., Ding, Y., Ning, L., Wang, S., Li, H., Yin, D., Chua, T.-S., and Li, Q. (2024). A survey on rag meeting Ilms: Towards retrieval-augmented large language models. In Proceedings of the 30th ACM SIGKDD Conference on Knowledge Discovery and Data Mining, pages 6491-6501.
6) Krause, D. (2023). Large language models and generative ai in finance: an analysis of chatgpt, bard, and bing ai. Bard, and Bing Al (July 15, 2023).
7) Lee, D. and Yeo, S. (2022). Developing an ai-based chatbot for practicing responsive teaching in mathematics. Computers & Education, 191:104646.
8) Pande, K. (2024). How to measure personalization success: The key metrics.
9) Patil, R. and Gudivada, V. (2024). A review of current trends, techniques, and challenges in large language models (Ilms). Applied Sciences, 14(5):2074.
10) Saha, D., Tarek, S., Yahyaei, K., Saha, S. K., Zhou, J., Tehranipoor, M., and Farahmandi, F. (2024). Llm for soc security: A paradigm shift. IEEE Access.
11) Tustumi, F., Andreollo, N. A., and Aguilar-Nascimento, J. E. d. (2023). Future of the language models in healthcare: The role of chatgpt. ABCD. Arquivos Brasileiros de Cirurgia Digestiva (S~ao Paulo), 36:e1727.

## Claims

1. An LLM-based method for calculating lead scores and generating product recommendations for a user of a troubleshooting chatbot, comprising:
a) providing an orchestrator module being adapted to wrap said chatbot for:
a.1) receiving user prompts from said user;
a.2) in response to said user prompts, conducting a troubleshooting conversation with said chatbot user;
a.3) inferring lead scores for said user;
a.4) generating a solution to each difficulty raised by said user during said troubleshooting conversation;
b) providing a recommender system being in data communication with said orchestrator module;
c) sending the generated solution and the history of said troubleshooting conversation to said recommender system;
d) analyzing said solution, history and lead scores and providing a recommendation that corresponds to said user, to said orchestrator module; and
e) if said lead scores of said user are higher than a predetermined threshold, presenting said solution, augmented with said recommendation to said user, by said orchestrator module.

2. A method according to claim 1, further comprising optimizing the recommendation timing for the user.

3. A method according to claim 1, wherein the wrapper for the chatbot provides one or more of the following capabilities:
- data lookup;
- data analysis;
- problems resolution;
- product recommendation.

4. A method according to claim 1, wherein the orchestrator module selects which capabilities will be utilized to guide a conversation with the user.

5. A method according to claim 1, wherein the recommender system identifies products from a catalog that can enhance the user's existing setup, solve the user's current difficulties, or prevent these and other difficulties from occurring in the future.

6. A method according to claim 1, wherein the lead scores are used to determine the likelihood of the users to convert to thereby rank users, based on their lead quality.

7. A method according to claim 1, further comprising:
a) performing conversation analysis to assess product relevance;
b) analyzing, by the recommender system, the generated solution along with the preceding conversation between the user and the chatbot; and
c) determining if a product can resolve the difficulty presented by the user or can prevent the raised difficulty, or related difficulties, from occurring/reoccurring.

8. A method according to claim 1, wherein the Recommender system is adapted to conduct a user-specific assessment, for determining both the likelihood of successful product adoption, and the user's ability to comprehend the value proposed by the recommended product.

9. A method according to claim 8, wherein the user-specific assessment includes scoring metrics that reflect the user's needs, technical expertise, and engagement, based on a lead score or a technical score.

10. An LLM-based system for calculating lead scores and generating product recommendations for a user of a troubleshooting chatbot, comprising a computerized device with at least one processor and associated memory for storing operational software, which comprises;
b) an orchestrator module being adapted to wrap said chatbot for:
a.1) receiving user prompts from said user;
a.2) in response to said user prompts, conducting a troubleshooting conversation with said chatbot user;
a.3) inferring lead scores for said user;
a.4) generating a solution to each difficulty raised by said user during said troubleshooting conversation;
b) a recommender system being in data communication with said orchestrator module;
said computerized device is adapted to:
f) send the generated solution and the history of said troubleshooting conversation to said recommender system;
g) analyze said solution, history and lead scores and providing a recommendation that corresponds to said user, to said orchestrator module; and
h) if said lead scores of said user are higher than a predetermined threshold, present said solution, augmented with said recommendation to said user, by said orchestrator module.
